# EUROPEAN PATENT APPLICATION

(11) **EP 4 700 846 A1**
(43) Date of publication of application: **25.02.2026**
(21) Application number: 25196485.4
(22) Date of filing: 18.08.2025
(51) Int. Cl.: H01M 4/133, H01M 4/62, H01M 10/0525

(54) **SECONDARY BATTERY AND ELECTRONIC DEVICE**

(30) Priority: 20.08.2024 CN 202411146749
(71) Applicant: Ningde Amperex Technology Ltd., Ningde City, Fujian Province 352100 (CN)
(72) Inventor: YU, Lei, Ningde City, Fujian Province, China, 352100 (CN)
(74) Representative: Icosa

(57) **Abstract**

A secondary battery includes a positive electrode plate, an electrolyte solution, and a negative electrode plate. The negative electrode plate includes a negative current collector and a negative electrode material layer disposed on at least one surface of the negative current collector. The negative electrode material layer includes a negative active material and an ordered mesoporous material. A small-angle X-ray diffraction pattern of powder of the negative electrode material layer exhibits 3 diffraction peaks in a diffraction angle range of 0.5° to 5°, including a first diffraction peak in a diffraction angle range of 0.5° to 1.5°. A particle size distribution curve of the powder of the negative electrode material layer exhibits a first peak in a particle size range of 50 nm to 400 nm.

## Description

### TECHNICAL FIELD

This application relates to the field of electrochemical technology, and in particular, to a secondary battery and an electronic device.

### BACKGROUND

Secondary batteries such as a lithium-ion battery are widely used in the field of smartphones by virtue of advantages such as a high energy density, a long cycle life, and no memory effect. Currently, such consumer batteries are in the form of easily customizable pouch batteries. Because consumers increasingly demand longer battery runtime and faster charging speed, the design of secondary batteries currently needs to further improve cycle performance and kinetic performance.

### SUMMARY

An objective of this application is to provide a secondary battery and an electronic device to improve the cycle performance and kinetic performance of the secondary battery. Specific technical solutions are as follows:
A first aspect of this application provides a secondary battery. The secondary battery includes a positive electrode plate, an electrolyte solution, and a negative electrode plate. The negative electrode plate includes a negative current collector and a negative electrode material layer disposed on at least one surface of the negative current collector. The negative electrode material layer includes a negative active material and an ordered mesoporous material. A small-angle X-ray diffraction pattern of powder of the negative electrode material layer exhibits 3 diffraction peaks in a diffraction angle range of 0.5° to 5°, including a first diffraction peak in a diffraction angle range of 0.5° to 1.5°. A particle size distribution curve of the powder of the negative electrode material layer exhibits a first peak in a particle size range of 50 nm to 400 nm. The small-angle X-ray diffraction pattern of the powder of the negative electrode material layer exhibits the characteristic peaks within the above range, indicating that an ordered mesoporous material exists in the negative electrode material layer. The particle size distribution curve of the powder of the negative electrode material layer exhibits the first peak within the above range. The first peak corresponds to a particle diameter of the ordered mesoporous material. The negative electrode material layer includes the ordered mesoporous material with the above characteristics, thereby improving the electrolyte storage capacity of the material layer. In addition, ordered pore channels in the ordered mesoporous material can promote the storage and transmission of an electrolyte solution, thereby improving the cycle performance and kinetic performance of the secondary battery.

In some embodiments of this application, the ordered mesoporous material includes at least one of ordered mesoporous SiO₂ or ordered mesoporous Al₂O₃. The ordered mesoporous material falling within the above range improves the cycle performance and kinetic performance of the secondary battery.

In some embodiments of this application, based on a mass of the negative electrode material layer, a mass percentage of the ordered mesoporous material is 0.05% to 0.5%. By controlling the mass percentage of the ordered mesoporous material to fall within the above range, this application enhances the cycle performance and kinetic performance of the secondary battery while endowing the secondary battery with a relatively high energy density.

In some embodiments of this application, based on a mass of the negative electrode material layer, a mass percentage of the ordered mesoporous material is 0.1% to 0.3%. By controlling the mass percentage of the ordered mesoporous material to fall within the above range, this application further enhances the cycle performance and kinetic performance of the secondary battery while endowing the secondary battery with a relatively high energy density.

In some embodiments of this application, the ordered mesoporous material satisfies at least one of the following characteristics: (1) Dv₅₀ of particles of the ordered mesoporous material is 50 nm to 400 nm; and (2) a pore volume V of the ordered mesoporous material is 0.5 cm³/g to 5 cm³/g. The ordered mesoporous material satisfying at least one of the above characteristics improves the cycle performance and kinetic performance of the secondary battery.

In some embodiments of this application, the negative active material includes graphite. A particle size distribution curve of powder of the negative electrode material layer exhibits a second peak in a particle size range of 5,000 nm to 20,000 nm. The second peak corresponds to the particle diameter of the negative active material. The particle diameter of the negative active material, when falling within the above range, indicates that the graphite is of a suitable particle size that enables a negative electrode plate to be compacted effectively during cold pressing. In addition, the above configuration facilitates rapid transmission of ions, and increases the charge rate of the secondary battery, thereby improving the cycle performance and kinetic performance of the secondary battery.

In some embodiments of this application a ratio D of Dv₅₀ of particles of the ordered mesoporous material to Dv₅₀ of particles of the graphite is 0.0025 to 0.03. Controlling the ratio D of Dv₅₀ of the particles of the ordered mesoporous material to Dv₅₀ of the graphite particles to fall within the above range is conducive to constructing superior ion transmission channels in the negative electrode material layer, thereby promoting the transmission of ions, and then further improving the cycle performance and kinetic performance of the secondary battery.

In some embodiments of this application, a specific surface area of the graphite is S m²/g, a pore volume of the ordered mesoporous material is V cm³/g, and S and V satisfy 0.1 ≤ S/V ≤ 2. By controlling the ratio of S to V to fall within the above range, the amount of electrolyte solution stored in the pores of the graphite material and the pore channels of the ordered mesoporous material is more appropriate, and the futile electrolyte storage capacity in the graphite pores is reduced. The electrolyte can be quickly released during cycling, thereby alleviating the capacity fading of the secondary battery during cycling, and then further improving the cycle performance and kinetic performance of the secondary battery, and increasing the gravimetric energy density of the secondary battery at the same time.

In some embodiments of this application, Dv₅₀ of particles of the graphite is 5,000 nm to 20,000 nm, and/or, a specific surface area S of the graphite is 0.2 m²/g to 10 m²/g. Controlling Dv₅₀ of the graphite particles to fall within the above range not only facilitates processing of the negative electrode plate, but also makes it convenient for the ordered mesoporous material to more uniformly attach to the surface of the graphite particles, thereby promoting rapid transmission of ions, increasing the charge speed of the secondary battery, and then more significantly improving the cycle performance and kinetic performance of the secondary battery. Controlling the specific surface area S of the graphite particles to fall within the above range facilitates the transmission of ions in the negative electrode material layer, and alleviates the capacity fading of the secondary battery during cycling, thereby more significantly improving the cycle performance and kinetic performance of the secondary battery. Therefore, controlling the above parameters to fall within a suitable range can more significantly improve the cycle performance and kinetic performance of the secondary battery.

In some embodiments of this application, the negative electrode material layer satisfies at least one of the following characteristics: (1) a coating weight of the negative electrode material layer on a single side is 80 mg/1540.25 mm² to 160 mg/1540.25 mm²; and (2) a compaction density of the negative electrode material layer is 1.6 g/cm³ to 1.9 g/cm³. The negative electrode material layer satisfying at least one of the above characteristics improves the cycle performance and kinetic performance of the secondary battery.

A second aspect of this application provides an electronic device. The electronic device includes the secondary battery disclosed in any one of the preceding embodiments. The secondary battery provided in this application is of superior cycle performance and kinetic performance, and therefore, the electronic device provided in this application achieves superior operating performance and a relatively long service life.

Some of the beneficial effects of this application are as follows:
This application provides a secondary battery and an electronic device. The secondary battery includes a positive electrode plate, an electrolyte solution, and a negative electrode plate. The negative electrode plate includes a negative current collector and a negative electrode material layer disposed on at least one surface of the negative current collector. The negative electrode material layer includes a negative active material and an ordered mesoporous material. A small-angle X-ray diffraction pattern of powder of the negative electrode material layer exhibits 3 diffraction peaks in a diffraction angle range of 0.5° to 5°, including a first diffraction peak in a diffraction angle range of 0.5° to 1.5°. A particle size distribution curve of the powder of the negative electrode material layer exhibits a first peak in a particle size range of 50 nm to 400 nm. The small-angle X-ray diffraction pattern of the powder of the negative electrode material layer exhibits the characteristic peaks within the above range, indicating that an ordered mesoporous material exists in the negative electrode material layer. The particle size distribution curve of the powder of the negative electrode material layer exhibits the first peak within the above range. The first peak corresponds to a particle diameter of the ordered mesoporous material. The negative electrode material layer includes the ordered mesoporous material, thereby improving the electrolyte storage capacity of the material layer. In addition, ordered pore channels in the ordered mesoporous material can promote the storage and transmission of an electrolyte solution, thereby improving the cycle performance and kinetic performance of the secondary battery.

Definitely, a single product or method in which the technical solution of this application is implemented does not necessarily achieve all of the above advantages concurrently.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a small-angle X-ray diffraction pattern of powder of a negative electrode material layer according to Embodiment 1-1;
FIG. 2 is a particle size distribution curve of powder of a negative electrode material layer according to Embodiment 1-1; and
FIG. 3 is a small-angle X-ray diffraction pattern of powder of a negative electrode material layer according to Comparative Embodiment 3.

### DETAILED DESCRIPTION

The following describes the technical solutions in some embodiments of this application clearly in detail with reference to the drawings appended hereto. Evidently, the described embodiments are merely a part of but not all of the embodiments of this application. All other embodiments derived by a person skilled in the art based on this application still fall within the protection scope of this application.

It is hereby noted that in specific embodiments of this application, this application is construed by using a lithium-ion battery as an example of the secondary battery, but the secondary battery of this application is not limited to the lithium-ion battery.

A first aspect of this application provides a secondary battery. The secondary battery includes a positive electrode plate, an electrolyte solution, and a negative electrode plate. The negative electrode plate includes a negative current collector and a negative electrode material layer disposed on at least one surface of the negative current collector. The negative electrode material layer includes a negative active material and an ordered mesoporous material. A small-angle X-ray diffraction pattern of powder of the negative electrode material layer exhibits 3 diffraction peaks in a diffraction angle range of 0.5° to 5°, including a first diffraction peak in a diffraction angle range of 0.5° to 1.5°. A particle size distribution curve of the powder of the negative electrode material layer exhibits a first peak in a particle size range of 50 nm to 400 nm. The small-angle X-ray diffraction pattern of the powder of the negative electrode material layer exhibits 3 diffraction peaks, including the first diffraction peak, in the above range, indicating that the negative electrode material layer contains an ordered mesoporous material with long-range order, thereby improving the capacity of the negative electrode material layer in absorbing, storing, and transmitting an electrolyte solution. The particle size distribution curve of the powder of the negative electrode material layer exhibits the first peak. The first peak corresponds to the particle diameter of the ordered mesoporous material. The first peak falling within the above range appears in the particle size distribution curve of the powder of the negative electrode material layer, indicating that the negative electrode material layer contains an ordered mesoporous material with a particle diameter falling within this range, thereby making it convenient for the ordered mesoporous material to construct uniform and continuous ion transmission channels in the negative electrode material layer. The negative electrode material layer contains the ordered mesoporous material satisfying the above characteristics, thereby improving the capacity of the negative electrode material layer in absorbing and storing the electrolyte solution. In addition, the ordered pore channels in the ordered mesoporous material facilitate release and utilization of the electrolyte solution. The mesoporous pore channels in the ordered mesoporous material also enable construction of ion (such as lithium ion) transmission channels, promote transmission of the electrolyte solution, and therefore, improve the cycle performance and kinetic performance of the secondary battery. In this application, the ordered mesoporous material means a mesoporous material in which the pore channels of the material are arranged regularly in an ordered manner. As defined by the International Union of Pure and Applied Chemistry (IUPAC), a mesoporous material means a porous material with a pore diameter of 2 nm to 50 nm.

The above-mentioned "3 diffraction peaks in a diffraction angle range of 0.5° to 5°" include a second diffraction peak and a third diffraction peak in addition to the first diffraction peak exhibited in a diffraction angle range of 0.5° to 1.5°. The diffraction angle 2θ of the second diffraction peak falls between the first diffraction peak and the third diffraction peak, and the specific position thereof is not particularly limited.

In this application, the ordered mesoporous material may be a two-dimensional ordered mesoporous material or a three-dimensional ordered mesoporous material, and preferably a two-dimensional ordered mesoporous material. The pore channels of the two-dimensional ordered mesoporous material are more ordered and more favorable for ion conduction, thereby enhancing the cycle performance and kinetic performance of the secondary battery.

In some embodiments, the ordered mesoporous material includes at least one of ordered mesoporous TiO₂, ordered mesoporous carbon, ordered mesoporous SiO₂, or ordered mesoporous Al₂O₃. The ordered mesoporous material falling within the above range improves the capacity of the negative electrode material layer in absorbing and storing the electrolyte solution, and promotes transmission of the electrolyte solution, thereby improving the cycle performance and kinetic performance of the secondary battery.

In some embodiments of this application, the ordered mesoporous material includes at least one of ordered mesoporous SiO₂ or ordered mesoporous Al₂O₃. The ordered mesoporous material falling within the above range more favorably improves the capacity of the negative electrode material layer in absorbing and storing the electrolyte solution, and promotes the transmission of the electrolyte solution, thereby more significantly improving the cycle performance and kinetic performance of the secondary battery.

In some embodiments of this application, based on a mass of the negative electrode material layer, a mass percentage of the ordered mesoporous material is 0.05% to 0.5%. In some embodiments of this application, based on the mass of the negative electrode material layer, the mass percentage of the ordered mesoporous material is 0.1% to 0.3%. For example, the mass percentage of the ordered mesoporous material may be 0.05%, 0.08%, 0.1%, 0.15%, 0.2%, 0.23%, 0.25%, 0.3%, 0.35%, 0.38%, 0.4%, 0.45%, 0.5%, or a value falling within a range formed by any two thereof. By controlling the mass percentage of the ordered mesoporous material to fall within the above range, this application can favorably exert the effect of the ordered mesoporous material, endow the negative electrode material layer with a high capacity in absorbing storing an electrolyte solution and with a high ion conductivity, and cause the proportion of the negative active material in the negative electrode material layer to be relatively high, thereby enhancing the cycle performance and kinetic performance of the secondary battery while endowing the secondary battery with a relatively high energy density.

In some embodiments of this application, Dv₅₀ of particles of the ordered mesoporous material is 50 nm to 400 nm. For example, Dv₅₀ of the particles of the ordered mesoporous material may be 50 nm, 60 nm, 80 nm, 100 nm, 130 nm, 150 nm, 160 nm, 180 nm, 200 nm, 250 nm, 300 nm, 340 nm, 380 nm, 400 nm, or a value falling within a range formed by any two thereof. In this application, the ordered mesoporous material may be attached to the surface of the particles of the negative active material. Adjusting Dv₅₀ of the particles of the ordered mesoporous material to fall within the above range makes it convenient for the ordered mesoporous material to uniformly attach to the surface of the particles of the negative active material, thereby increasing the coverage rate of the ordered mesoporous material on the surface of the particles of the negative active material, and also reducing the risk that the ordered mesoporous material agglomerates on the surface of the negative active material or attaches to a local region of the surface in a plurality of layers and consequently leads to blocking of the pores of the negative active material. In this way, superior ion transmission channels are constructed in the negative electrode material layer to promote the transmission of ions, thereby more significantly enhancing the cycle performance and kinetic performance of the secondary battery.

In some embodiments of this application, a pore volume V of the ordered mesoporous material is 0.5 cm³/g to 5 cm³/g. For example, the pore volume V of the ordered mesoporous material may be 0.5 cm³/g, 0.8 cm³/g, 1 cm³/g, 1.8 cm³/g, 2 cm³/g, 2.2 cm³/g, 3 cm3/g, 3.5 cm³/g, 4 cm³/g, 4.4 cm³/g, 5 cm³/g, or a value falling within a range formed by any two thereof. By adjusting the pore volume of the ordered mesoporous material to fall within the above range, this application can favorably exert the effect of the ordered mesoporous material, endow the negative electrode material layer with a high capacity in absorbing and storing the electrolyte solution, construct superior ion transmission channels, and promote the transmission of the electrolyte solution. In addition, such settings facilitate release and utilization of the electrolyte solution in the pores of the ordered mesoporous material during cycling of the secondary battery, thereby further improving the cycle performance and kinetic performance of the secondary battery.

In this application, the characteristics such as Dv₅₀ and pore volume of the particles of the ordered mesoporous material may be combined arbitrarily. The ordered mesoporous material satisfies at least one of the above characteristics. All the implementations covered by such combinations fall within the protection scope of this application.

In some embodiments of this application, the negative active material includes graphite. The graphite may include, but is not limited to, artificial graphite and natural graphite. A particle size distribution curve of the powder of the negative electrode material layer exhibits a second peak in a particle size range of 5,000 nm to 20,000 nm. The second peak corresponds to the particle diameter of the negative active material. The negative active material includes graphite, and the second peak falling within the above range is exhibited in the particle size distribution curve of the powder of the negative electrode material layer, indicating that the graphite is of a suitable particle size that enables the negative electrode plate to be compacted effectively during cold pressing. In addition, the above configuration facilitates rapid transmission of ions, and increases the charge rate of the secondary battery, thereby improving the cycle performance and kinetic performance of the secondary battery.

In some embodiments of this application a ratio D of Dv₅₀ of particles of the ordered mesoporous material to Dv₅₀ of particles of the graphite is 0.0025 to 0.03. For example, the ratio D of Dv₅₀ of the particles of the ordered mesoporous material to Dv₅₀ of the particles of the graphite may be 0.0025, 0.0033, 0.005, 0.00667, 0.008, 0.01, 0.015, 0.02, 0.024, 0.0267, 0.028, 0.03, or a value falling within a range formed by any two thereof. The negative electrode material layer includes the ordered mesoporous material and the graphite. When the ordered mesoporous material is uniformly attached to the surface of the graphite particles, the effect of the ordered mesoporous material can be exerted more sufficiently. By controlling the ratio of Dv₅₀ of the particles of the ordered mesoporous material to Dv₅₀ of the graphite particles to fall within the above range, the ordered mesoporous material can be more uniformly attached to the graphite surface, thereby increasing the coverage rate of the ordered mesoporous material on the graphite surface, and also reducing the risk that the ordered mesoporous material agglomerates on the graphite surface or attaches to a local region of the graphite surface in a plurality of layers and consequently leads to blocking of the pores of the graphite and the pore channels of the ordered mesoporous material. In this way, superior ion transmission channels are constructed in the negative electrode material layer to promote the transmission of ions, thereby more significantly enhancing the cycle performance and kinetic performance of the secondary battery.

In some embodiments of this application, the specific surface area of the graphite is S m²/g, the pore volume of the ordered mesoporous material is V cm³/g, and S and V satisfy 0.1 ≤ S/V ≤ 2. For example, the ratio of S to V, denoted as S/V, may be 0.1, 0.3, 0.5, 0.8, 1, 1.2, 1.4, 1.5, 1.6, 1.8, 2, or a value falling within a range formed by any two thereof. By controlling the ratio of S to V to fall within the above range, the amount of electrolyte solution stored in the pores of the graphite material and the pore channels of the ordered mesoporous material is more appropriate, and the futile electrolyte storage capacity in the graphite pores is reduced. The electrolyte can be quickly released during cycling, thereby alleviating the capacity fading of the secondary battery during cycling, and then further improving the cycle performance and kinetic performance of the secondary battery, and increasing the gravimetric energy density of the secondary battery at the same time.

In some embodiments of this application, Dv₅₀ of the graphite particles is 5,000 nm to 20,000 nm. For example, Dv₅₀ of the graphite particles may be 5,000 nm, 8,000 nm, 10,000 nm, 12,000 nm, 15,000 nm, 18,000 nm, 20,000 nm, or a value falling within a range formed by any two thereof. Controlling Dv₅₀ of the graphite particles to fall within the above range not only facilitates processing (such as compaction) of the negative electrode plate, but also makes it convenient for the ordered mesoporous material to more uniformly attach to the surface of the graphite particles, thereby promoting rapid transmission of ions, increasing the charge speed of the secondary battery, and then more significantly improving the cycle performance and kinetic performance of the secondary battery.

In some embodiments of this application, the specific surface area S of the graphite is 0.2 m²/g to 10 m²/g. For example, the specific surface area S of the graphite may be 0.2 m²/g, 0.4 m²/g, 0.8 m²/g, 1 m²/g, 3 m²/g, 5 m²/g, 6 m²/g, 8 m²/g, 10 m²/g, or a value falling within a range formed by any two thereof. Controlling the specific surface area S of the graphite particles to fall within the above range makes the amount of electrolyte solution stored in the pores of the graphite material more suitable, and enables the electrolyte solution to be released quickly during cycling. In addition, this facilitates the transmission of ions in the negative electrode material layer, and alleviates the capacity fading of the secondary battery during cycling, thereby more significantly improving the cycle performance and kinetic performance of the secondary battery.

In some embodiments of this application, the coating weight of the negative electrode material layer on a single side is 80 mg/1540.25 mm² to 160 mg/1540.25 mm². For example, the coating weight of the negative electrode material layer on a single side may be 80 mg/1540.25 mm², 95 mg/1540.25 mm², 112 mg/1540.25 mm², 120 mg/1540.25 mm², 130 mg/1540.25 mm², 145 mg/1540.25 mm², 152 mg/1540.25 mm², 160 mg/1540.25 mm², or a value falling within a range formed by any two thereof. By controlling the coating weight of the negative electrode material layer on a single side to fall within the above range, this application can shorten the transmission distance of ions inside the negative electrode plate, increase the electrolyte infiltration speed for the negative electrode material layer, more significantly exert the effect of the ordered mesoporous material, and further improve the ion transmission capacity, thereby improving the cycle performance and kinetic performance of the secondary battery. In addition, this increases the energy density of the secondary battery.

In some embodiments of this application, the compaction density of the negative electrode material layer is 1.6 g/cm³ to 1.9 g/cm³. For example, the compaction density of the negative electrode material layer may be 1.6 g/cm³, 1.65 g/cm³, 1.7 g/cm³, 1.78 g/cm³, 1.8 g/cm³, 1.85 g/cm³, 1.9 g/cm³, or a value falling within a range formed by any two thereof. By controlling the compaction density of the negative electrode material layer to fall within the above range, this application makes the porosity of the negative electrode material layer fall within a suitable range, thereby increasing the infiltration speed of the electrolyte solution for the negative electrode plate, more significantly exerting the effect of the ordered mesoporous material, and increasing the capacity of the negative electrode material layer in absorbing and storing the electrolyte solution, thereby improving the cycle performance and kinetic performance of the secondary battery. In addition, this increases the energy density of the secondary battery.

In this application, the characteristics, such as the coating weight on a single side and the compaction density, of the negative electrode material layer may be combined arbitrarily. The negative electrode material layer satisfies at least one of the above characteristics. All the implementations covered by such combinations fall within the protection scope of this application.

The compaction density of the negative electrode material layer is usually controlled by adjusting the cold-pressing pressure of the negative electrode plate. As an example, with other conditions remaining constant, increasing the cold-pressing pressure leads to an increase in the compaction density of the negative electrode material layer, and decreasing the cold-pressing pressure leads to a decrease in the compaction density of the negative electrode material layer.

The method for preparing the ordered mesoporous material is not particularly limited herein, as long as the objectives of this application can be achieved. For example, a method for preparing the ordered mesoporous material may include, but is not limited to, the following steps: dissolving a templating agent in deionized water in an environment of 35 °C to 40 °C, adding tetraethyl orthosilicate (TEOS) and hydrochloric acid (HCl) into the solution sequentially, stirring continuously for a duration of 24 hours to 48 hours at a speed of 100 rpm to 500 rpm, and placing the mixture into a polytetrafluoroethylene flask. Performing aging at a temperature of 120 °C to 140 °C for a duration of 24 hours to 48 hours, and filtering, washing, and drying the mixture. Finally, calcining the mixture at a temperature of 500 °C to 600 °C for a duration of 4 hours to 6 hours to remove the templating agent to obtain white powder, which is ordered mesoporous silicon dioxide. The templating agent may be a triblock-copolymer surfactant P123 (Aldrich, EO₂₀PO₇₀EO₂₀).

Dv₅₀ of the particles of the ordered mesoporous material is usually changed by adjusting the aging time. When other conditions remain constant, Dv₅₀ of the particles of the ordered mesoporous material is increased by prolonging the aging time, and Dv₅₀ of the particles of the ordered mesoporous material is decreased by shortening the aging time.

The pore volume of the ordered mesoporous material is usually changed by adjusting the amount of the templating agent used. When other conditions remain constant, increasing the amount of the templating agent increases the pore volume of the ordered mesoporous material, and decreasing the amount of the templating agent reduces the pore volume of the ordered mesoporous material.

In this application, the ordered mesoporous materials with different Dv₅₀ values and different pore volumes may be commercially purchased, and then tested by using the parameter testing methods provided herein below to select a desired ordered mesoporous material.

In this application, the graphite materials with different Dv₅₀ values and different specific surface areas may be commercially purchased and then tested by using the parameter testing methods provided herein below to select desired graphite.

The "negative electrode material layer disposed on at least one surface of the negative current collector" means that the negative electrode material layer may be disposed on one surface of the negative current collector or on both surfaces of the negative current collector along the thickness direction of the current collector. It is hereby noted that the "surface" here may be the entire surface region of the negative current collector, or a partial surface region of the negative current collector, without being particularly limited herein, as long as the objectives of the application can be achieved. The thicknesses of the negative current collector and the negative electrode material layer are not particularly limited herein, as long as the objectives of this application can be achieved. For example, the thickness of the negative current collector is 4 µm to 12 µm, and the thickness of the negative electrode material layer on a single side is 30 µm to 160 µm.

The negative current collector is not particularly limited herein, as long as the objectives of this application can be achieved. For example, the negative current collector may include a copper foil, an aluminum foil, a nickel foil, a stainless steel foil, a titanium foil, foamed nickel, foamed copper, a conductive-metal-clad polymer substrate, or the like. The conductive metal includes, but is not limited to, copper, nickel, or titanium. The material of the polymer substrate includes, but is not limited to, at least one of polyethylene, polypropylene, poly(ethylene-co-propylene), polyethylene terephthalate, polyethylene naphthalate, or poly(p-phenylene terephthalamide).

The negative electrode material layer in this application may further include at least one of a conductive agent, a binder, or a thickener. The types of the conductive agent and the binder are not particularly limited herein as long as the objectives of this application can be achieved. For example, the conductive agent may include, but is not limited to, at least one of conductive carbon black (Super P), carbon nanotubes (CNTs), carbon fibers, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. For example, the binder may include, but is not limited to, at least one of styrene-acrylate emulsion, polyacrylic acid, sodium polyacrylate, potassium polyacrylate, lithium polyacrylate, polyvinyl alcohol, carboxymethyl cellulose, polyimide, polyamide imide, styrene-butadiene rubber, or polyvinylidene fluoride. The thickener may include, but is not limited to, at least one of sodium carboxymethyl cellulose or lithium carboxymethyl cellulose.

The mass percentages of the negative active material, the conductive agent, the binder, and the thickener in the negative electrode material layer are not particularly limited herein, as long as the objectives of this application can be achieved. For example, based on the mass of the negative electrode material layer, the mass percentage of the negative active material may be 90% to 99%, the mass percentage of the conductive agent may be 0% to 4%, the mass percentage of the binder may be 0.1% to 4%, and the mass percentage of the thickener may be 0.1% to 2%.

The method for preparing the negative electrode plate is not particularly limited herein as long as the objectives of this application can be achieved. For example, the negative electrode plate may be prepared by using the following method: mixing a negative active material, an ordered mesoporous material, a conductive agent, a binder, and a thickener, adding deionized water, and stirring well to obtain a negative electrode slurry. Applying the negative electrode slurry evenly on one surface of the negative current collector, and oven-drying the slurry to obtain a negative electrode plate coated with a negative electrode material layer on a single side. Subsequently, repeating the above coating steps on the other surface of the negative current collector, and oven-drying the current collector to obtain a negative electrode plate coated with a negative electrode material layer on both sides. Cold-pressing and cutting the coated negative electrode plate to obtain a negative electrode plate.

The positive electrode plate is not particularly limited herein, as long as the objectives of this application can be achieved. For example, the positive electrode plate includes a positive current collector and a positive electrode material layer disposed on at least one surface of the positive current collector. The "positive electrode material layer disposed on at least one surface of the positive current collector" means that the positive electrode material layer may be disposed on one surface of the positive current collector or on both surfaces of the positive current collector along the thickness direction of the current collector. It is hereby noted that the "surface" here may be the entire region of the surface of the positive current collector, or a partial region of the surface of the positive current collector, without being particularly limited herein, as long as the objectives of the application can be achieved. The thicknesses of the positive current collector and positive electrode material layer are not particularly limited herein, as long as the objectives of this application can be achieved. For example, the thickness of the positive current collector is 5 µm to 20 µm. The thickness of the positive electrode material layer on a single side is 50 µm to 150 µm.

The positive current collector is not particularly limited herein, as long as the objectives of this application can be achieved. For example, the positive current collector may include metal foil, a composite current collector, or the like. For example, the metal foil may be aluminum foil. The composite current collector may include a polymer material substrate and a metal material layer located on at least one surface of the polymer material substrate. The material of the metal material layer may include at least one of aluminum, aluminum alloy, nickel, nickel alloy, titanium, titanium alloy, silver, or silver alloy. The polymer material substrate may include at least one of polypropylene, polyethylene terephthalate, polybutylene terephthalate, polystyrene, or polyethylene.

The positive electrode material layer in this application includes a positive active material. The type of the positive active material is not particularly limited herein, as long as the objectives of this application can be achieved. For example, the positive active material includes at least one of lithium cobalt oxide, lithium nickel cobalt manganese oxide (NCM811, NCM622, NCM523, NCM111), lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. The positive electrode material layer of this application may further include a binder and a conductive agent. The conductive agent and the binder are not particularly limited herein, as long as the objectives of this application can be achieved. For example, the conductive agent and binder may be at least one of the above conductive agents and the above binders respectively. The mass ratio between the positive active material, the conductive agent, and the binder in the positive electrode material layer is not particularly limited herein, and may be selected by a person skilled in the art as actually required, as long as the objectives of this application can be achieved.

The method for preparing the positive electrode plate is not particularly limited herein as long as the objectives of this application can be achieved. For example, the positive electrode plate may be prepared by the following method: mixing a positive active material, a conductive agent, and a binder, adding N-methylpyrrolidone (NMP), and stirring well to obtain a positive electrode slurry. Applying the positive electrode slurry evenly onto one surface of the positive current collector, and oven-drying the slurry to obtain a positive electrode plate coated with a positive electrode material layer on a single side. Subsequently, repeating the above coating steps on the other surface of the positive current collector, and oven-drying the current collector to obtain a positive electrode plate coated with a positive electrode material layer on both sides. Cold-pressing and cutting the coated positive electrode plate to obtain a positive electrode plate. The mass ratio between the positive active material, the conductive agent, and the binder in the positive electrode material layer is not particularly limited herein, as long as the objectives of this application can be achieved.

The electrolyte solution in this application includes a lithium salt and an organic solvent. The lithium salt may include, but is not limited to, at least one of lithium hexafluorophosphate (LiPF₆), lithium tetrafluoroborate (LiBF₄), lithium difluorophosphate (LiPO₂F₂), lithium bis(trifluoromethanesulfonyl)imide (LiTFSI), lithium bis(fluorosulfonyl)imide (LiFSI), lithium bis(oxalato)borate (LiBOB), or lithium difluoro(oxalato)borate (LiDFOB). The concentration of the lithium salt in the electrolyte solution is not particularly limited in this application, as long as the objectives of this application can be achieved. The organic solvent is not particularly limited herein as long as the objectives of this application can be achieved. For example, the organic solvent may include, but is not limited to, at least one of a carbonate ester compound, a carboxylate ester compound, an ether compound, or another organic solvent. The carbonate compound may include, but is not limited to, at least one of a chain carbonate compound or a cyclic carbonate compound. The chain carbonate ester compound may include, but is not limited to, at least one of dimethyl carbonate, diethyl carbonate, dipropyl carbonate, methyl propyl carbonate, ethylene propyl carbonate, or ethyl methyl carbonate. The cyclic carbonate compound may include, but is not limited to, at least one of ethylene carbonate, propylene carbonate, butylene carbonate, or vinyl ethylene carbonate. The carboxylate ester compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of ethylene glycol dimethyl ether, dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above-mentioned other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The electrolyte solution may further include an additive. The additive may include, but is not limited to, at least one of fluoroethylene carbonate, 1,3-propane sultone, adiponitrile, or the like.

The secondary battery in this application may further include a separator. The separator is configured to separate the positive electrode plate from the negative electrode plate, prevent a short circuit inside the secondary battery, and allow electrolyte ions to pass freely without affecting the electrochemical charge and discharge processes. The separator is not particularly limited herein as long as the objectives of this application can be achieved. For example, the separator may be made of a material including, but not limited to, at least one of polyethylene-based, polypropylene-based, or polytetrafluoroethylene-based polyolefin separator, a polyester film (such as polyethylene terephthalate (PET) film), a cellulose film, a polyimide film, a polyamide film, or a spandex or aramid film. The type of the separator may include, but is not limited to, a woven film, a non-woven film (non-woven fabric), a microporous film, a composite film, a calendered film, a spinning film, or the like. The separator of this application may assume a porous structure. The porous layer is disposed on at least one surface of the separator. The porous layer includes inorganic particles and a binder. The inorganic particles may include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may include at least one of polyvinylidene fluoride, poly(vinylidene fluoride-co-hexafluoropropylene), a polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, or polyhexafluoropropylene. The pore size of the porous structure is not particularly limited as long as the objectives of this application can be achieved. For example, the pore size may be 0.01 µm to 1 µm. The thickness of the separator is not particularly limited in this application, as long as the objectives of this application can be achieved. For example, the thickness may be 3 µm to 30 µm.

The secondary battery further includes a housing. The housing is configured to accommodate a positive electrode plate, a separator, a negative electrode plate, an electrolyte solution, and other components known in the art for use in the secondary battery. The other components are not limited herein. The housing is not particularly limited herein, and may be a housing well-known in the art, as long as the objectives of this application can be achieved. For example, the housing may be a hard housing or a flexible housing. The material of the hard housing may be metal. The type of the metal is not limited herein. The hard housing may be a metallic hard housing known in the art as long as the objectives of this application can be achieved. The flexible housing may be a metallic laminated film such as an aluminum laminated film, a steel laminated film.

The type of the secondary battery is not particularly limited herein, and may be any device in which an electrochemical reaction occurs. For example, the types of the secondary battery may include, but are not limited to, a lithium-ion battery, a sodium-ion battery, a lithium polymer secondary battery, and a lithium-ion polymer secondary battery.

The process of preparing the secondary battery in this application is well known to a person skilled in the art, and is not particularly limited herein. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a secondary battery; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a secondary battery. In addition, an overcurrent protection element, a conductive plate, and the like may be placed into a packaging bag as required, so as to prevent the rise of internal pressure, overcharge, and overdischarge of the secondary battery.

A second aspect of this application provides an electronic device. The electronic device includes the secondary battery disclosed in any one of the preceding embodiments. The secondary battery provided in this application is of superior cycle performance and kinetic performance, and therefore, the electronic device provided in this application achieves superior operating performance and a relatively long service life.

The electronic device is not particularly limited herein, and may be any electronic device known in the prior art. In some embodiments, the types of the electronic device may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

### Embodiments

The implementations of this application are described below in more detail with reference to some embodiments and comparative embodiments. Various tests and evaluations are performed by the following methods. In addition, unless otherwise specified, the word "parts" means parts by mass, and the symbol "%" means a percentage by mass.

### Test Methods and Devices

### Sampling method

### (1) Method for sampling the negative electrode plate

Discharging a lithium-ion battery in each embodiment and comparative embodiment at a current of 0.5C until the voltage drops to 3 V, and then disassembling the battery to obtain a negative electrode plate. Cleaning the negative electrode plate by using dimethyl carbonate (DMC), and then drying the negative electrode plate at 60 °C for a duration of 8 hours to 12 hours to obtain a negative electrode plate sample.

### (2) Method for sampling the powder of the negative electrode material layer

Scraping off the negative electrode material layer on the surface of the negative electrode plate sample by using a scraper. Heat-treating the scraped powder in a tube furnace at 400 °C for 4 hours under argon protection to remove the binder and the thickener in the powder to obtain powder of the negative electrode material layer, that is, a mixture of the negative active material and the ordered mesoporous material.

### (3) Method for sampling the ordered mesoporous material

Scraping off the negative electrode material layer on the surface of the negative electrode plate sample by using a scraper. Calcining the scraped powder at a temperature of 200 °C to 800 °C in air for 4 hours to obtain an ordered mesoporous material by separating.

### Small-angle X-ray diffraction (XRD) test

Oven-drying the powder of a negative electrode material layer, and performing an XRD test on the powder with reference to the international standard JJS K 0131-1996 *General Rules for X-Ray Diffractometry* by using an X-ray diffractometer (model: Bruker D8 ADVANCE) and Cu Kα rays at a voltage 40 kV, a current of 40 mA, a test angle of 0° to 10°, and a scanning speed of 0.2°/min to obtain a small-angle XRD pattern.

### Testing the mass percentage of the ordered mesoporous material

Taking the above negative electrode plate sample, scraping off the negative electrode material layer on the surface of the negative electrode plate sample by using a scraper, and weighing the mass of the resultant powder, denoted as Mo. Separating the ordered mesoporous material in the powder according to the steps of the above method for sampling the ordered mesoporous material. Weighing the ordered mesoporous material to obtain a weight denoted as My. Calculating the mass percentage of the ordered mesoporous material as: mass percentage = My/Mo × 100%.

### Testing the particle size

Taking 0.7 gram of the sample of the ordered mesoporous material obtained according to the above sampling method. Obtaining a particle size distribution curve of the sample by using a Malvern particle size analyzer (model: MasterSizer 2000). Analyzing the curve to obtain Dv₅₀ of the particles of the ordered mesoporous material. Setting the parameters of the analyzer as follows: the particle absorption rate is set to 0.01, the particle refractive index is set to 1.692, and the obscuration is set to 8%. Performing the same method to measure Dv₅₀ of graphite particles, and obtaining a particle size distribution curve of the powder sample of the negative electrode material layer obtained according to the above sampling method. The term Dv₅₀ represents a particle diameter value at which the cumulative volume percentage of the particles of the material sample reaches 50% in a volume-based particle size distribution curve viewed from a small-diameter side.

### Testing the pore volume and the specific surface area

Taking 2 grams of the sample of the ordered mesoporous material obtained according to the above sampling method. Degassing the sample at 200 °C for 2 hours, and then placing the ordered mesoporous material into a sample tube. Using an automated adsorption-desorption analyzer (MAC500) to measure an amount of carbon dioxide adsorbed by the sample. Plotting an adsorption-desorption isotherm, and calculating the pore volume of the ordered mesoporous material through simulation and analysis. Using the same method to obtain an adsorption-desorption isotherm of graphite, and calculating the specific surface area of the graphite through simulation and analysis.

### Testing the coating weight of the negative electrode material layer on a single side

Punching the negative electrode plate sample at any position coated with a negative electrode material layer on both sides, so as to obtain a specimen with an area of 1540.25 mm². Weighing the specimen to obtain a mass denoted as m₁ mg. Subsequently, peeling off the negative electrode material layers on both sides of the specimen, and weighing the negative current collector to obtain a mass denoted as m₂ mg. Calculating the coating weight of the negative electrode material layer on a single side by using the following formula: coating weight of the negative electrode material layer on a single side = (m₁ - m₂)/(2 × 1540.25), in units of mg/mm².

### Testing the compaction density of the negative electrode material layer

Punching the negative electrode plate sample at any position coated with a negative electrode material layer, so as to obtain a specimen with an area of 1540.25 mm². Weighing the specimen to obtain a mass denoted as m₃ mg, and measuring the thickness of the specimen, denoted as h₁ µm. Subsequently, peeling off the negative electrode material layer of the specimen, weighing the negative current collector to obtain a mass denoted as m₄ mg, and measuring the thickness of the negative current collector, denoted as h₂ µm. Calculating the compaction density of the negative electrode material layer by using the following formula: compaction density of the negative electrode material layer = (m₃ - m₄) × 10³/(1540.25 × (h₁ - h₂)), in units of g/cm³.

### Testing the bonding force between the negative electrode material layer and the negative current collector

Cutting a negative electrode plate sample into test strips, each test strip being 20 mm in width and 100 mm in length. Affixing a 20 mm (width) × 100 mm (length) double-sided tape (Nitto No. 5000NS) to a steel sheet, and then affixing the test strip onto the double-sided tape, with the negative electrode material layer facing down. Connecting a 20 mm (width) × 100 mm (length) paper strip to one end of the test strip by using double-sided tape, and rolling a roller over the test strip back and forth 4 times to obtain a specimen. Measuring the force by using a tensile tester. Fixing the specimen onto a specimen stage, folding the paper strip upward to 180°, and fixing the paper strip with a fixture. Subsequently, using a tensile tester to pull the paper strip at a speed of 50 mm/min until the negative electrode material layer on the surface of the double-sided tape is detached from the negative current collector, and then finishing the test and saving the test data. Calculating the bonding force F₁ (in units of N/m) between the negative electrode material layer and the negative current collector based on the tensile force applied and the tensile displacement caused when the negative electrode material layer is detached from the negative current collector.

### Testing the cohesive force of the negative electrode plate

Cutting a negative electrode plate sample into test strips, each test strip being 20 mm in width and 100 mm in length. Affixing a 20 mm (width) × 80 mm (length) single-sided adhesive tape onto a middle part of the negative electrode plate. Cutting out a paper strip of 20 mm wide and 60 mm long, and inserting the paper strip into a gap between the negative electrode plate and the single-sided adhesive tape, with an overlap length of 15 mm. Rolling the test strip back and forth 4 times with a roller to obtain a specimen. Measuring the force by using a tensile tester. Fixing the paper strip with a fixture, and then using a tensile tester to start pulling the paper strip at a speed of 50 mm/min until the single-sided adhesive tape bonded to the negative electrode material layer is detached from the negative electrode plate, and then finishing the test and saving the test data. Calculating the cohesive force F₂ (in units of N/m) of the negative electrode plate based on the tensile force applied and the tensile displacement caused when the single-sided adhesive tape bonded to the negative electrode material layer is detached from the negative electrode plate.

### Testing the kinetic performance

Evaluating the kinetic performance of a lithium-ion battery by using the impedance of a symmetrical battery. The lower the impedance of the symmetrical battery, the higher the kinetic performance. The higher the impedance, the worse the kinetic performance. Obtaining a negative electrode plate sample according to the above sampling method of the negative electrode plate. Taking two pieces of negative electrode plate samples from each embodiment and comparative embodiment, with the two pieces being separated by a separator in the middle. Arranging the two pieces of negative electrode plate samples opposite to each other to assemble a symmetrical battery. An electrolyte solution in the symmetrical battery is the same as that in Embodiment 1-1.

Charging the symmetrical battery at a constant current of 0.7C at 25° until the voltage reaches 4.5 V, and then charging the symmetrical battery at a constant voltage of 4.5 V until the current tapers off to 0.025C indicating that the symmetrical battery reaches a fully charged state, that is, 100% state of charge (SOC). Subsequently, discharging the symmetrical battery at 0.1C for 5 seconds, and recording the voltage as V₁ and the current as I₁ at this time. Afterward, discharging the symmetrical battery at 1C for 1 second, and recording the voltage as V₂ and the current as I₂ at this time. Repeating the above discharging steps until the voltage drops to 3.0 V. Calculating, when the battery is discharged to 50% SOC, the impedance DCR of the symmetrical battery according to the following formula: DCR = (V₁ - V₂)/(I₁ - I₂).

### Testing the cycle performance

Leaving a lithium-ion battery to stand in a 25 °C±1 °C thermostat for 30 minutes, and then performing a charge-and-discharge cycle in the following process: charging the battery at a constant current of 0.5C until the voltage reaches 4.5 V, and then charging the battery at a constant voltage of 4.5 V until the current tapers off to 0.02C. Leaving the battery to stand for 15 minutes, and then discharging the battery at a current rate of 0.5C until the voltage drops to 3 V, and leaving the battery to stand for 30 minutes, thereby completing one charge-and-discharge cycle. Recording a first-cycle discharge capacity of the lithium-ion battery as C₀. Subsequently, repeating the above charge-and-discharge process for 1000 cycles, and recording the 1000^{th}-cycle discharge capacity of the lithium-ion battery as C₁. 1000^{th}-cycle capacity retention rate = C₁/C₀ × 100%.

### Embodiment 1-1

### <Preparing an ordered mesoporous material>

Dissolving 4 grams of triblock-copolymer surfactant P123 (Aldrich, EO₂₀PO₇₀EO₂₀) as a templating agent in 105 mL of deionized water in a 40 °C environment. Adding 8.6 mL of tetraethyl orthosilicate (TEOS) and 20 mL of hydrochloric acid (HCl, at a concentration of 12 mol/L) into the solution sequentially, stirring continuously for a duration of 24 hours at a speed of 200 rpm, and placing the mixture into a polytetrafluoroethylene flask. Performing aging at 120 °C for a duration of 24 hours, and filtering, washing, and drying the mixture. Finally, calcining the mixture at 550 °C for 5 hours to remove the templating agent to obtain white powder, which is ordered mesoporous silicon dioxide.

### <Preparing a negative electrode plate>

Mixing a negative active material artificial graphite, the ordered mesoporous material SiO₂, the binder styrene-acrylate emulsion, and the thickener sodium carboxymethyl cellulose (Daicel 2200) at a mass ratio of 97.8 : 0.2 : 1 : 1. Adding deionized water as a solvent. Stirring well by using a ROSS double planetary mixer to obtain a negative electrode slurry with a solid content of 45 wt%. Using a double-layer extrusion coating machine to apply the negative electrode slurry evenly onto both surfaces of 10 µm-thick negative current collector copper foil at a coating speed of 18 m/min, with a single-side coating weight being 120 mg/1540.25 mm². Oven-drying the slurry, and then cold-pressing the foil by using a cold press, and then cutting the plate into sheets, and welding tabs to obtain a negative electrode plate of 78 mm × 875 mm in size for future use. The compaction density of the negative electrode material layer is 1.8 g/cm³.

### <Preparing a positive electrode plate>

Mixing LiCoO₂ as a positive active material, conductive carbon black as a conductive agent, polyvinylidene fluoride as a binder at a mass ratio of 97.9 : 0.9 : 1.2, and adding N-methyl-pyrrolidone (NMP) as a solvent. Stirring the mixture well in a vacuum mixer to obtain a positive electrode slurry in which the solid content is 75 wt%. Using a double-layer extrusion coating machine to apply the positive electrode slurry evenly onto both surfaces of 6 µm-thick positive current collector aluminum foil at a coating speed of 18 m/min, with a single-side coating weight being 220 mg/1540.25 mm². Oven-drying the slurry, and then cold-pressing the foil by using a cold press, and then cutting the plate into sheets, and welding tabs to obtain a positive electrode plate of 74 mm × 867 mm in size for future use. The compaction density of the positive electrode material layer is 4.15 g/cm³.

### <Preparing an electrolyte solution>

Mixing ethylene carbonate, propylene carbonate, diethyl carbonate, and ethyl propionate at a mass ratio of 1 : 1 : 1 :1 in an environment in which the water content is less than 10 ppm, and stirring well to obtain an organic solvent. Subsequently, adding a lithium salt LiPF₆ into the organic solvent, and stirring well to obtain an electrolyte solution. Based on the mass of the electrolyte solution, the mass percentage of the lithium salt is 12.5%, and the remainder is the organic solvent.

### <Separator>

Using a 5 µm-thick polyethylene film as a substrate layer of the separator. Applying a 2 µm-thick ceramic layer onto one surface of the substrate layer, and then applying an adhesive layer onto a surface of the ceramic layer and the other surface of the substrate layer at a concentration of 2.5 mg/1540.25 mm². Oven-drying the coating to obtain a separator. The ceramic layer contains aluminum oxide and polyvinylidene fluoride mixed at a mass ratio of 95 : 5. The material of the adhesive layer is poly(vinylidene fluoride-co-hexafluoropropylene).

### <Preparing a lithium-ion battery>

Stacking the above-prepared positive electrode plate, separator, and negative electrode plate sequentially such that the side, coated with the ceramic layer and the adhesive layer, of the separator is oriented toward the positive electrode plate, and the side coated with only the adhesive layer is oriented toward the negative electrode plate, and that the separator is located between the positive electrode plate and the negative electrode plate to play a role of separation. Winding the stacked structure to obtain an electrode assembly. Placing the electrode assembly into an aluminum laminated film packaging bag, dehydrating the packaged electrode assembly in an 80 °C vacuum for 24 hours, and then injecting the above-prepared electrolyte solution. Performing steps such as vacuum sealing, static standing, chemical formation, degassing, and edge trimming to obtain a lithium-ion battery. The upper-limit voltage of the chemical formation is 4.15 V, the temperature of the chemical formation is 70 °C, and the chemically formed product is left to stand for 2 hours.

### Embodiments 1-2 to 1-28

Identical to Embodiment 1-1 except that the parameters are adjusted according to Table 1. When the mass percentage of the ordered mesoporous material changes, the mass percentage of the negative active material changes accordingly, but the mass percentages of the binder and the thickener remain unchanged. Dv₅₀ of the ordered mesoporous material is changed by adjusting the aging time during preparation of the ordered mesoporous material. The pore volume V of the ordered mesoporous material is changed by adjusting the amount of the templating agent used during preparation of the ordered mesoporous material.

### Embodiments 2-1 to 2-4

Identical to Embodiment 1-1 except that the parameters are adjusted according to Table 2. The compaction density of the negative electrode material layer is changed by adjusting the cold-pressing pressure of the negative electrode plate.

### Comparative Embodiment 1

Identical to Embodiment 1-1 except that, in <Preparing a negative electrode plate>, no ordered mesoporous material is added, the mass percentage of the negative active material is changed accordingly, and the mass percentages of the binder and the thicker remain unchanged.

### Comparative Embodiment 2

Identical to Embodiment 1-1 except that the ordered mesoporous material is replaced with ordinary (non-porous) SiO₂ in <Preparing a negative electrode plate>.

### Comparative Embodiment 3

Identical to Embodiment 1-1 except that the ordered mesoporous material is replaced with mesoporous SiO₂ (Evonik silica AEROSIL R972, which is a non-ordered mesoporous material) in <Preparing a negative electrode plate>.

### Comparative Embodiments 4 to 5

Identical to Embodiment 1-1 except that the parameters are adjusted according to Table 1. Dv₅₀ of the ordered mesoporous material is changed by adjusting the aging time during preparation of the ordered mesoporous material.

The preparation parameters and performance parameters of each embodiment and each comparative embodiment are shown in Table 1 to Table 2.

**Table 1 (To be continued)**

| | Number of diffraction peaks in a diffraction angle range of 0.5° to 5° | First diffraction peak exhibited? | First peak exhibited? | Ordered mesoporous material | Mass percentage of ordered mesoporous material (%) | Dv₅₀ of particles of ordered mesoporous material (nm) |
|---|---|---|---|---|---|---|
| Embodiment 1-1 | 3 | Yes | Yes | Ordered mesoporous SiO₂ | 0.2 | 100 |
| Embodiment 1-2 | 3 | Yes | Yes | Ordered mesoporous SiO₂ | 0.05 | 100 |
| Embodiment 1-3 | 3 | Yes | Yes | Ordered mesoporous SiO₂ | 0.1 | 100 |
| Embodiment 1-4 | 3 | Yes | Yes | Ordered mesoporous SiO₂ | 0.3 | 100 |
| Embodiment 1-5 | 3 | Yes | Yes | Ordered mesoporous SiO₂ | 0.5 | 100 |
| Embodiment 1-6 | 3 | Yes | Yes | Ordered mesoporous SiO₂ | 0.7 | 100 |
| Embodiment 1-7 | 3 | Yes | Yes | Ordered mesoporous Al₂O₃ | 0.2 | 100 |
| Embodiment 1-8 | 3 | Yes | Yes | Ordered mesoporous SiO₂ | 0.2 | 50 |
| Embodiment 1-9 | 3 | Yes | Yes | Ordered mesoporous SiO₂ | 0.2 | 200 |
| Embodiment 1-10 | 3 | Yes | Yes | Ordered mesoporous SiO₂ | 0.2 | 300 |
| Embodiment 1-11 | 3 | Yes | Yes | Ordered mesoporous SiO₂ | 0.2 | 400 |
| Embodiment 1-12 | 3 | Yes | Yes | Ordered mesoporous SiO₂ | 0.2 | 100 |
| Embodiment 1-13 | 3 | Yes | Yes | Ordered mesoporous SiO₂ | 0.2 | 100 |
| Embodiment 1-14 | 3 | Yes | Yes | Ordered mesoporous SiO₂ | 0.2 | 100 |
| Embodiment 1-15 | 3 | Yes | Yes | Ordered mesoporous SiO₂ | 0.2 | 100 |
| Embodiment 1-16 | 3 | Yes | Yes | Ordered mesoporous SiO₂ | 0.2 | 100 |
| Embodiment 1-17 | 3 | Yes | Yes | Ordered mesoporous SiO₂ | 0.2 | 100 |
| Embodiment 1-18 | 3 | Yes | Yes | Ordered mesoporous SiO₂ | 0.2 | 100 |
| Embodiment 1-19 | 3 | Yes | Yes | Ordered mesoporous SiO₂ | 0.2 | 100 |
| Embodiment 1-20 | 3 | Yes | Yes | Ordered mesoporous SiO₂ | 0.2 | 300 |
| Embodiment 1-21 | 3 | Yes | Yes | Ordered mesoporous SiO₂ | 0.2 | 50 |
| Embodiment 1-22 | 3 | Yes | Yes | Ordered mesoporous SiO₂ | 0.2 | 400 |
| Embodiment 1-23 | 3 | Yes | Yes | Ordered mesoporous SiO₂ | 0.2 | 50 |
| Embodiment 1-24 | 3 | Yes | Yes | Ordered mesoporous SiO₂ | 0.2 | 100 |
| Embodiment 1-25 | 3 | Yes | Yes | Ordered mesoporous SiO₂ | 0.2 | 100 |
| Embodiment 1-26 | 3 | Yes | Yes | Ordered mesoporous SiO₂ | 0.2 | 100 |
| Embodiment 1-27 | 3 | Yes | Yes | Ordered mesoporous TiO₂ | 0.2 | 100 |
| Embodiment 1-28 | 3 | Yes | Yes | Ordered mesoporous carbon | 0.2 | 100 |
| Comparative Embodiment 1 | 0 | No | No | / | / | / |
| Comparative Embodiment 2 | 0 | No | Yes | Non-porous SiO₂ | 0.2 | 100 |
| Comparative Embodiment 3 | 0 | No | Yes | Mesoporous SiO₂ | 0.2 | 100 |
| Comparative Embodiment 4 | 3 | Yes | No | Ordered mesoporous SiO₂ | 0.2 | 25 |
| Comparative Embodiment 5 | 3 | Yes | No | Ordered mesoporous SiO₂ | 0.2 | 600 |

**Table 1 (Continued)**

| | V (cm³/g) | Dv₅₀ of graphite particles (nm) | S (m²/g) | D | S/V | 1000^{th}-cycle capacity retention rate cycled at 25 °C (%) | Impedance of symmetrical battery (mΩ) |
|---|---|---|---|---|---|---|---|
| Embodiment 1-1 | 1 | 15000 | 1 | 0.0067 | 1 | 86.3 | 381669 |
| Embodiment 1-2 | 1 | 15000 | 1 | 0.0067 | 1 | 82.1 | 467484 |
| Embodiment 1-3 | 1 | 15000 | 1 | 0.0067 | 1 | 83.2 | 410102 |
| Embodiment 1-4 | 1 | 15000 | 1 | 0.0067 | 1 | 86.1 | 423401 |
| Embodiment 1-5 | 1 | 15000 | 1 | 0.0067 | 1 | 82.5 | 474352 |
| Embodiment 1-6 | 1 | 15000 | 1 | 0.0067 | 1 | 80.1 | 532401 |
| Embodiment 1-7 | 1 | 15000 | 1 | 0.0067 | 1 | 86.1 | 382435 |
| Embodiment 1-8 | 1 | 15000 | 1 | 0.0033 | 1 | 85.7 | 392158 |
| Embodiment 1-9 | 1 | 15000 | 1 | 0.0133 | 1 | 85.6 | 394512 |
| Embodiment 1-10 | 1 | 15000 | 1 | 0.02 | 1 | 84.9 | 403425 |
| Embodiment 1-11 | 1 | 15000 | 1 | 0.0267 | 1 | 84 | 431623 |
| Embodiment 1-12 | 0.5 | 15000 | 1 | 0.0067 | 2 | 85.8 | 393423 |
| Embodiment 1-13 | 2 | 15000 | 1 | 0.0067 | 0.5 | 85.8 | 377813 |
| Embodiment 1-14 | 3 | 15000 | 1 | 0.0067 | 0.33 | 85.3 | 369312 |
| Embodiment 1-15 | 5 | 15000 | 1 | 0.0067 | 0.2 | 85.0 | 347812 |
| Embodiment 1-16 | 0.3 | 15000 | 1 | 0.0067 | 3.33 | 81.5 | 460112 |
| Embodiment 1-17 | 6 | 15000 | 1 | 0.0067 | 0.167 | 81.2 | 335321 |
| Embodiment 1-18 | 1 | 5000 | 1 | 0.02 | 1 | 85.5 | 431453 |
| Embodiment 1-19 | 1 | 20000 | 1 | 0.005 | 1 | 85.9 | 402312 |
| Embodiment 1-20 | 1 | 10000 | 1 | 0.03 | 1 | 83.7 | 441123 |
| Embodiment 1-21 | 1 | 20000 | 1 | 0.0025 | 1 | 84.5 | 403534 |
| Embodiment 1-22 | 1 | 10000 | 1 | 0.04 | 1 | 81.7 | 513452 |
| Embodiment 1-23 | 1 | 50000 | 1 | 0.001 | 1 | 81.9 | 493425 |
| Embodiment 1-24 | 5 | 15000 | 0.5 | 0.0067 | 0.1 | 84.2 | 338456 |
| Embodiment 1-25 | 4 | 15000 | 0.2 | 0.0067 | 0.05 | 80.5 | 380001 |
| Embodiment 1-26 | 4 | 15000 | 10 | 0.0067 | 2.5 | 81.9 | 481223 |
| Embodiment 1-27 | 1 | 15000 | 1 | 0.0067 | 1 | 84.1 | 432345 |
| Embodiment 1-28 | 1 | 15000 | 1 | 0.0067 | 1 | 82.5 | 384234 |
| Comparative Embodiment 1 | / | 15000 | 1 | / | / | 80.1 | 578875 |
| Comparative Embodiment 2 | / | 15000 | 1 | 0.0067 | / | 80.2 | 583456 |
| Comparative Embodiment 3 | 1 | 15000 | 1 | 0.0067 | 1 | 80.5 | 542567 |
| Comparative Embodiment 4 | 1 | 15000 | 1 | 0.0017 | 1 | 79.5 | 572312 |
| Comparative Embodiment 5 | 1 | 15000 | 1 | 0.04 | 1 | 80.1 | 532413 |

| | | | | | | | |
|---|---|---|---|---|---|---|---|
| Note: "/" in Table 1 indicates absence of the corresponding parameter or substance. | | | | | | | |

As can be seen from Embodiments 1-1 to 1-28 and Comparative Embodiments 1 to 5, the negative electrode material layer includes an ordered mesoporous material, and the powder of the negative electrode material layer exhibits characteristic peaks falling within the range specified herein, that is, the first diffraction peak and the first peak. Therefore, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance. The powder of the negative electrode material layer in Comparative Embodiments 1 to 3 does not contain an ordered mesoporous material, and the small-angle X-ray diffraction pattern of the powder of the negative electrode material layer thereof does not exhibit the characteristic peaks falling within the range specified herein. The particle size distribution curve of the powder of the negative electrode material layer in Comparative Embodiments 4 to 5 does not exhibit the first peak in the particle size range of 50 nm to 400 nm. The 1000^{th}-cycle capacity retention rate of the lithium-ion battery cycled at 25 °C is relatively low, and the impedance of the symmetrical battery is relatively high, indicating that the cycle performance and kinetic performance of the lithium-ion battery are inferior.

The mass percentage of the ordered mesoporous material usually affects the cycle performance and kinetic performance of the lithium-ion battery. As can be seen from Embodiments 1-1 to 1-6, when the mass percentage of the ordered mesoporous material is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The type of the ordered mesoporous material usually affects the cycle performance and kinetic performance of the lithium-ion battery. As can be seen from Embodiments 1-1 and 1-7 and Embodiments 1-27 to 1-28, when the ordered mesoporous materials falling within the ranges specified herein are employed, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

Dv₅₀ of the ordered mesoporous material usually affects the cycle performance and kinetic performance of the lithium-ion battery. As can be seen from Embodiment 1-1 and Embodiments 1-8 to 1-11, when Dv₅₀ of the ordered mesoporous material is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The pore volume V of the ordered mesoporous material usually affects the cycle performance and kinetic performance of the lithium-ion battery. As can be seen from Embodiment 1-1 and Embodiments 1-12 to 1-17, when the pore volume V of the ordered mesoporous material is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

Dv₅₀ of the graphite particles usually affects the cycle performance and kinetic performance of the lithium-ion battery. As can be seen from Embodiment 1-1 and Embodiments 1-18 to 1-19, when Dv₅₀ of the graphite particles is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The ratio D of Dv₅₀ of the particles of the ordered mesoporous material to Dv₅₀ of the graphite particles usually affects the cycle performance and kinetic performance of the lithium-ion battery. As can be seen from Embodiment 1-1 and Embodiments 1-18 to 1-23, when the value of D is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The specific surface area S of the graphite particles usually affects the cycle performance and kinetic performance of the lithium-ion battery. As can be seen from Embodiment 1-1 and Embodiments 1-24 to 1-26, when the specific surface area S of the graphite is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The ratio of the specific surface area S of the graphite particles to the pore volume V of the ordered mesoporous material, denoted as S/V, usually affects the cycle performance and kinetic performance of the lithium-ion battery. As can be seen from Embodiment 1-1, Embodiments 1-12 to 1-17, and Embodiments 1-24 to 1-26, when the value of S/V is controlled to fall within the range specified herein, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

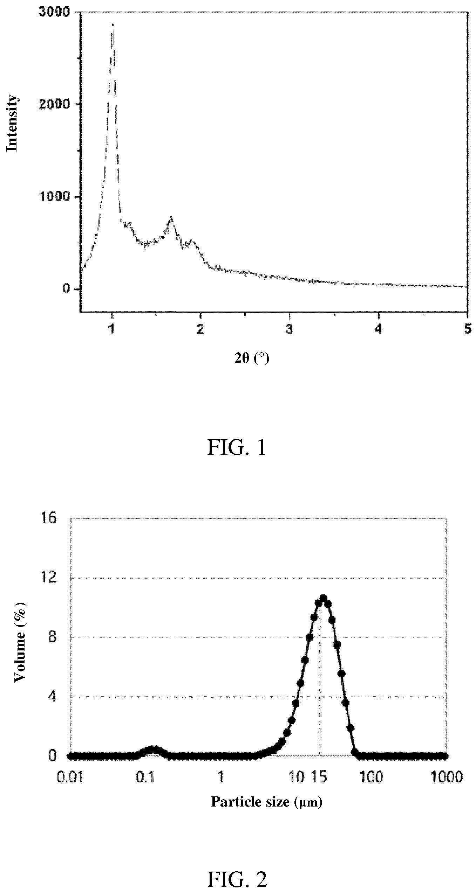

FIG. 1 is a small-angle X-ray diffraction pattern of powder of a negative electrode material layer according to Embodiment 1-1. As can be seen, in the small-angle X-ray diffraction pattern of the powder of the negative electrode material layer, three diffraction peaks are exhibited in a diffraction angle range of 0.5° to 5°-a first diffraction peak exhibited in a diffraction angle range of 0.5° to 1.5°, a second diffraction peak exhibited in a diffraction angle range of 0.8° to 2°, and a third diffraction peak exhibited in a diffraction angle range of 1.6° to 2.5°. The diffraction angle 2θ of the second diffraction peak falls between the first diffraction peak and the third diffraction peak.

FIG. 2 is a particle size distribution curve of powder of a negative electrode material layer according to Embodiment 1-1. As can be seen from FIG. 2, the particle size distribution curve of the powder of the negative electrode material layer exhibits two peaks, indicating that two types of particulate matters in the powder of the negative electrode material layer. The two peaks include a first peak exhibited at 0.1 µm (that is, 100 nm) and a second peak exhibited at 15 µm (that is, 15000 nm).

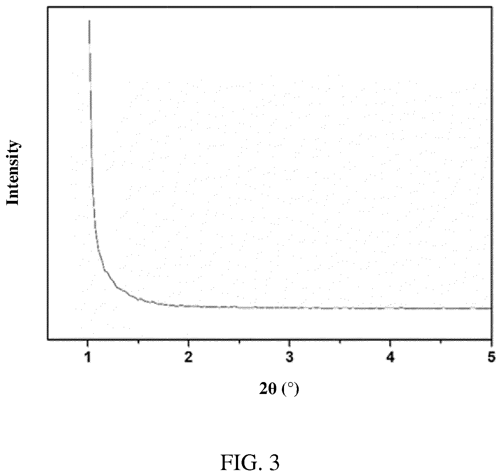

FIG. 3 is a small-angle X-ray diffraction pattern of powder of a negative electrode material layer according to Comparative Embodiment 3. As can be seen from FIG. 3, no diffraction peak is exhibited in the diffraction angle range of 0.5° to 5° in the small-angle X-ray diffraction pattern of the powder of the negative electrode material layer in Comparative Embodiment 3, indicating that no ordered pore channel structures exist in the negative electrode material layer. In other words, the mesoporous SiO₂ used in Comparative Embodiment 3 includes no ordered pore channels.

**Table 2**

| | Coating weight of negative electrode material layer on a single side (mg/1540.25mm²) | Compaction density of negative electrode material layer (g/cm³) | Bonding force between negative electrode material layer and negative current collector (N/m) | Cohesive force of negative electrode plate (N/m) | 1000^{th}-cycle capacity retention rate cycled at 25 °C (%) | Impedance of symmetrical battery (mΩ) |
|---|---|---|---|---|---|---|
| Embodiment 1-1 | 120 | 1.8 | 13.2 | 18.2 | 86.3 | 381669 |
| Embodiment 2-1 | 80 | 1.8 | 12 | 15.9 | 84.5 | 301273 |
| Embodiment 2-2 | 160 | 1.8 | 14.8 | 20.2 | 83.4 | 493341 |
| Embodiment 2-3 | 120 | 1.6 | 11.8 | 15.3 | 83.6 | 293738 |
| Embodiment 2-4 | 120 | 1.9 | 14.5 | 19.2 | 85.1 | 462356 |

The coating weight of the negative electrode material layer on a single side usually affects the cycle performance and kinetic performance of the lithium-ion battery. As can be seen from Embodiment 1-1 and Embodiments 2-1 to 2-2, when the coating weight of the negative electrode material layer on a single side is controlled to fall within the range specified herein, the bonding force between the negative electrode material layer and the negative current collector is relatively high, the cohesive force of the negative electrode plate is relatively high, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

The compaction density of the negative electrode material layer usually affects the cycle performance and kinetic performance of the lithium-ion battery. As can be seen from Embodiment 1-1 and Embodiments 2-3 to 2-4, when the compaction density of the negative electrode material layer is controlled to fall within the range specified herein, the bonding force between the negative electrode material layer and the negative current collector is relatively high, the cohesive force of the negative electrode plate is relatively high, the lithium-ion battery exhibits a relatively high 1000^{th}-cycle capacity retention rate cycled at 25 °C, and the impedance of the symmetrical battery is relatively low, indicating that the lithium-ion battery exhibits superior cycle performance and kinetic performance.

It is hereby noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, or object that includes or comprises a series of elements not only includes such elements, but also includes other elements not expressly specified or also includes inherent elements of the process, method, or object.

Different embodiments of this application are described in a correlative manner. For the same or similar part in one embodiment, reference may be made to another embodiment. Each embodiment focuses on differences from other embodiments.

What is described above is merely preferred embodiments of this application, but not intended to limit the protection scope of this application. Any and all modifications, equivalent replacements, improvements, and the like made without departing from the essence and principles of this application still fall within the protection scope of this application.

## Claims

1. A secondary battery, comprising a positive electrode plate, an electrolyte solution, and a negative electrode plate; **characterized in that** the negative electrode plate comprises a negative current collector and a negative electrode material layer disposed on at least one surface of the negative current collector, and the negative electrode material layer comprises a negative active material and an ordered mesoporous material;
a small-angle X-ray diffraction pattern of powder of the negative electrode material layer exhibits 3 diffraction peaks in a diffraction angle range of 0.5° to 5°, comprising a first diffraction peak in a diffraction angle range of 0.5° to 1.5°; and
a particle size distribution curve of the powder of the negative electrode material layer exhibits a first peak in a particle size range of 50 nm to 400 nm.

2. The secondary battery according to claim 1, **characterized in that** the ordered mesoporous material comprises at least one of ordered mesoporous TiO₂, ordered mesoporous carbon, ordered mesoporous SiO₂, or ordered mesoporous Al₂O₃.

3. The secondary battery according to claim 1, **characterized in that** the ordered mesoporous material comprises at least one of the ordered mesoporous SiO₂ or the ordered mesoporous Al₂O₃.

4. The secondary battery according to claim 1, **characterized in that**, based on a mass of the negative electrode material layer, a mass percentage of the ordered mesoporous material is 0.05% to 0.5%.

5. The secondary battery according to claim 1, **characterized in that**, based on a mass of the negative electrode material layer, a mass percentage of the ordered mesoporous material is 0.1% to 0.3%.

6. The secondary battery according to any one of claims 1 to 4, **characterized in that** Dv₅₀ of particles of the ordered mesoporous material is 50 nm to 400 nm.

7. The secondary battery according to any one of claims 1 to 4, **characterized in that** the negative active material comprises graphite, and the particle size distribution curve of the powder of the negative electrode material layer exhibits a second peak in a particle size range of 5,000 nm to 20,000 nm.

8. The secondary battery according to any one of claims 1 to 7, **characterized in that** a ratio D of Dv₅₀ of particles of the ordered mesoporous material to Dv₅₀ of particles of the graphite is 0.0025 to 0.03.

9. The secondary battery according to any one of claims 1 to 7, **characterized in that** a specific surface area of the graphite is S m² /g, a pore volume of the ordered mesoporous material is V cm³/g, and S and V satisfy 0.1 ≤ S/V ≤ 2.

10. The secondary battery according to any one of claims 1 to 7, **characterized in that** Dv₅₀ of particles of the graphite is 5,000 nm to 20,000 nm.

11. The secondary battery according to any one of claims 1 to 10, **characterized in that** a coating weight of the negative electrode material layer on a single side is 80 mg/1540.25 mm² to 160 mg/1540.25 mm².

12. The secondary battery according to any one of claims 1 to 4, **characterized in that** a pore volume V of the ordered mesoporous material is 0.5 cm³/g to 5 cm³/g.

13. The secondary battery according to any one of claims 1 to 7, **characterized in that** a specific surface area S of the graphite is 0.2 m²/g to 10 m²/g.

14. The secondary battery according to any one of claims 1 to 10, **characterized in that** a compaction density of the negative electrode material layer is 1.6 g/cm³ to 1.9 g/cm³.

15. An electronic device, comprising the secondary battery according to any one of claims 1 to 14.
